# FASCICULE DE BREVET EUROPEEN

(11) **EP 0 421 875 B1**
(45) Date de publication et mention de la délivrance du brevet: **19.04.1995**
(21) Numéro de dépôt: 90402744.8
(22) Date de dépôt: 04.10.1990
(51) Int. Cl.: B01J 29/06, B01J 20/18

(54) **Procédé d'activation thermique de zéolites par percolation de gaz chaud**
Verfahren für die thermische Aktivierung von Zeolithen durch die Perkolation von heissen Gasen
Process for the thermal activation of zeolites by the percolation of hot gases

(30) Priorité: 06.10.1989 FR 8913065
(43) Date de publication de la demande: 10.04.1991
(73) Titulaire: CECA S.A., 92800 Puteaux (FR)
(72) Inventeur: Plee, Dominique, F-78250 Meulan (FR); Durand, Guy, F-14600 Honfleur (FR); Delcroix, Daniel, F-14130 Surville Pont Eveque (FR)
(74) Mandataire: Haicour, Philippe

(56) Documents cités:
- EP-A- 0 250 213
- DD-A- 239 533
- FR-A- 2 071 773
- US-A- 3 929 668
- US-H- 337 409

## Description

L'invention concerne un procédé d'activation thermique de zéolites par percolation d'un gaz chaud à travers un lit de granulés de ces zéolites. Il s'applique aux zéolites qui se dégradent sous l'action combinée de la vapeur d'eau et de la température, et plus particulièrement aux formes échangées par du potassium ou du calcium des zéolites de type A et X. Il fournit des zéolites activées à forte capacité d'adsorption.

Les zéolites sont des aluminosilicates cristallisés possédant un réseau poreux calibré. Grâce à la porosité exceptionnelle de leur structure, elles constituent un outil de véritable tamisage à l'échelle moléculaire par adsorption sélective de molécules dont la sélection des molécules s'opère soit par effet stérique, soit par effet de polarité. Leur nom de tamis moléculaires rappelle cette propriété.

Les applications industrielles des zéolites sont très variées et incluent les procédés de séparation, de purification et de catalyse. Parmi les zéolites les plus intéressantes, on trouve la zéolite A, dont la forme sodique (zéolite NaA) hydratée a pour formule :

Na₂O - Al₂O₃ - 2SiO₂ - (4 à 5) H₂O

et la zéolite X, dont la forme sodique hydratée a pour formule :

Na₂O - Al₂O₃ - (2 à 3) SiO₂ - (5 à 6) H₂O.

Les zéolites ont été largement décrites dans la littérature et plus particulièrement dans les articles de Breck. On les échange facilement en milieux aqueux par de nombreux cations, ce qui en modifie les propriétés d'adsorption. C'est ainsi qu'en substituant le sodium par le potassium, on réduit l'ouverture des pores de la zéolite NaA de 0,4nm (4Å) à 0,3nm (3Å): on obtient ainsi les zéolites dénommées 3A ou encore KA. En revanche, par échange calcique de la zéolite NaA, on élargit l'ouverture des pores de 0,4nm (4Å) à 0,5nm (5Å) et l'on obtient ainsi les zéolites dénommées 5A ou encore CaA.

On relève ci-après quelques usages de telles zéolites A ou X échangées.
- Utilisation de la zéolite CaA pour séparer des paraffines normales des charges contenant des hydrocarbures ramifiés, aromatiques et oléfiniques. Dans de tels procédés, la zéolite est mise en contact avec le mélange d'hydrocarbures, le plus souvent en phase vapeur, où elle se charge préférentiellement en molécules linéaires; après quoi, on récupère l'adsorbat, soit en augmentant la température, soit en réduisant la pression, soit encore en balayant avec un composé faisant office de désorbant.
- Utilisation de la zéolite CaA pour séparer des mélanges de gaz permanents (par exemple, mélanges O₂/N₂ dans l'enrichissement de l'air en oxygène, mélanges H₂/N₂ dans la purification d'hydrogène). Les procédés où ces zéolites sont mises en oeuvre sont connus sous le nom de PSA (du nom anglais du procédé: pressure swing adsorption); ils fonctionnent selon des cycles d'adsorption/désorption, par variation de la pression dans des conditions isothermes.
- Utilisation de la zéolite CaX dans les procédés de décarbonatation, ou pour des traitements de désulfuration de gaz.
- Utilisation de la forme calcique CaX pour les séparations des mélanges N₂/O₂.

Après avoir effectué l'échange ionique, et aggloméré le produit résultant (en général avec environ 20% en poids d'un liant argileux), il faut procéder à une élimination de l'eau incorporée dans la structure pour conférer à la zéolite ses propriétés d'adsorption. Les meilleures capacités d'adsorption que l'on sait obtenir sont celles de zéolites activées en laboratoire par dégazage sous vide des zéolites déshydratées. Industriellement, on procède par activation thermique dans des fours; on constate que les produits que l'on obtient ainsi ont des capacités d'adsorption notablement inférieures. Ce déficit d'activité que l'on attribue à un phénomène de dégradation hydrothermique est très sensible, notamment en ce qui concerne les capacités d'adsorption des tamis 5A et X pour l'azote, des tamis 5A pour l'oxyde de carbone, des tamis 5A pour les paraffines et des tamis X pour le gaz carbonique.

Parmi les procédés qui ont été décrits pour remédier à cette perte d'activité, certains tentent de réduire la sensibilité de la zéolite échangée à la dégradation hydrothermique en jouant sur les conditions d'échange. Ce sont par exemple :
- le brevet DD-A-226.864 (VEB) qui revendique un procédé d'échange calcique de la zéolite 4A effectué à 25° C sur une zéolite NaA ayant un pNa (mesure du sodium par le cologarithme de sa concentration molaire) compris entre 0,8 et 1,9 et une capacité d'adsorption de NH₃ comprise entre 150 et 400 ml/g;
- le brevet US-A-2 908 549 (TEXACO) qui traite d'un procédé d'échange calcique en présence de chaux solide et d'un sel de calcium à un pH maintenu autour de 11 durant l'échange, le sel de calcium étant indifféremment le chlorure ou le formiate.

D'autres jouent sur les conditions de l'activation, tel le brevet de l'Allemagne de l'Est, DD-A-239.533 (Université Karl Marx, Leipzig), qui décrit un procédé d'activation de la zéolite 5A au cours duquel on opère un fort balayage gazeux d'un gaz sec, non acide, dans un lit animé d'un mouvement tourbillonnaire, en augmentant la température par palliers jusqu'a 800 K (527°C), tout en respectant des vitesses de montée en température lentes dans des domaines d'élimination maximales de l'eau.

Mais malgré tout, ces procédés ne fournissent que des zéolites dont les capacités d'adsorption restent notablement inférieures aux capacités théoriques escomptées.

La demanderesse a constaté que l'on pouvait réaliser une amélioration importante de capacité d'adsorption, très simplement et de façon inattendue, par modification des conditions d'activation thermique, sans qu'il soit nécessaire d'apporter de changement aux étapes antérieures de synthèse et d'échange. Elle a constaté que contrairement aux résultats des travaux antérieurs et qui divulguaient des activations thermiques en four tournant par léchage par le gaz d'activation ou en lit transporté, on pouvait obtenir des zéolites activées douées de propriétés d'adsorption très substantiellement améliorées en procédant à l'activation par percolation d'un gaz chaud à travers un lit de la zéolite à activer, ou de tout autre entassement de zéolite pourvu que le ledit gaz percole à travers un lit dont les particules conservent leur disposition relative durant tout le processus d'activation.

L'invention réside ainsi dans un procédé d'activation de zéolites sensibles à la dégradation par action combinée de la vapeur d'eau et de la température, qui consiste à réaliser par un lit homogène et d'épaisseur comprise entre 0,03 et 20 mètres de granulés de ladite zéolite sous sa forme hydratée, à forcer à travers ce lit un courant de gaz sec non acide dont la vitesse comprise entre 0,01 et 1 ms⁻¹ T.P.N a été rendue uniforme par tout moyen approprié, le gaz est préchauffé à une température comprise entre 300°C et 700°C et les zéolites ainsi activées étant ensuite vidangées et conditionnées à l'abri de l'air ambiant.

Dans un mode préféré de l'invention, on réalise l'activation dans un cylindre métallique, fermé en bas par une grille, et que l'on remplit de façon uniforme, suivant les méthodes bien connues de l'homme de l'art pour obtenir des remplissages homogènes, avec le tamis à activer sous forme de granulés. On force un courant de gaz chaud, indifféremment de bas en haut ou de haut en bas. Dans le cas de lits de forte épaisseur montés dans des colonnes à fort diamètre, il y aura lieu d'aménager des distributeurs de gaz pour que dès le début de la colonne, l'écoulement du gaz soit le plus uniforme possible. On peut suivre l'avancement du front thermique par mesure de température, par exemple au moyen de thermocouples placés à différents niveaux. Lorsque la température maximale désirée (c'est-à-dire approximativement la température à laquelle le gaz de balayage a été préchauffé) est atteinte en sortie de lit, on poursuit l'opération pendant encore 5 à 60 minutes pour parfaire la déshydratation de la zéolite, mais surtout pour assurer le durcissement du liant du granulé. Puis on vidange, on refroidit et on conditionne la zéolite à l'abri de l'air ambiant, par exemple sous courant d'azote sec.

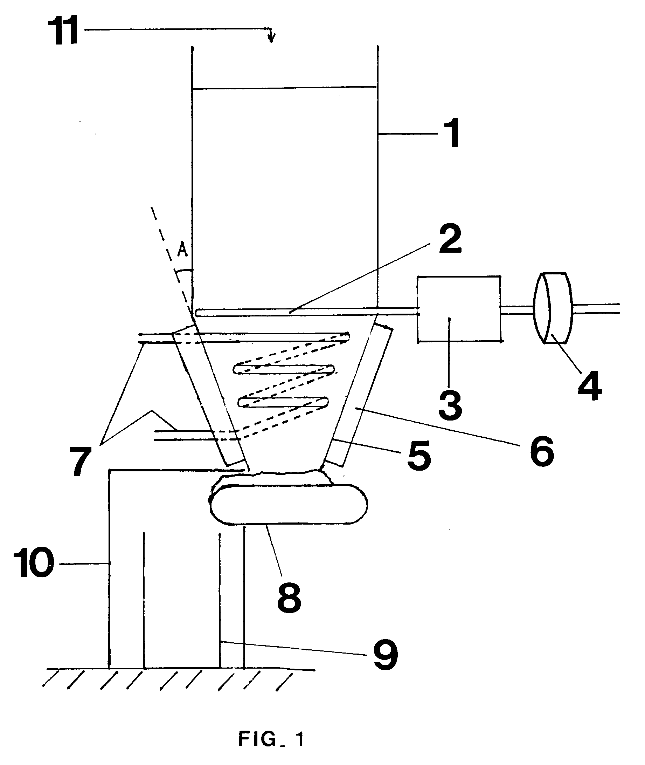

On peut également, selon l'invention, procéder à l'activation en continu, au sein d'une colonne à lit mobile. On en décrit ci-après un mode de réalisation. L'activateur représenté sur la figure 1 est composé, d'une colonne cylindrique (1) contenant la zéolite à activer thermiquement. Un distributeur de gaz (2) permet l'introduction de gaz à 600°C au moyen de l'échangeur (3); ce gaz est propulsé par un compresseur (4). Sous la ligne de niveau du distributeur, se trouve une trémie conique (5) à double enveloppe (6) qui permet le refroidissement du produit avant son soutirage. L'angle A que fait cette trémie avec la verticale est de 20°. Un deuxième dispositif de refroidissement est constitué par une conduite d'eau hélicoïdale (7) placée au centre de la trémie. Sous la trémie se trouve une bande transporteuse (8) qui contrôle le débit massique de zéolite en sortie. Le débit imposé par la bande (8) contrôle le débit d'entrée (11) du produit frais en attente d'activation. Un dispositif tournant permet d'égaliser le niveau de zéolite et d'éviter la formation d'un talus (non représenté). La zéolite activée thermiquement est conditionnée à une température de l'ordre de 80°C dans des fûts (9) mis à l'abri de l'air ambiant grâce à un caisson (10) en légère surpression d'air sec. Dans ce mode d'activation, les débits relatifs de gaz chaud et de zéolite sont tels que le front thermique se stabilise approximativement à mi-hauteur de la colonne. Dans ces conditions, le gaz en sortie de la colonne se fixe à une température constante basse, avec une teneur en eau inférieure à la saturation. On entend ici par basse température, une température comprise entre la température ambiante et environ 100°C; elle est surtout conditionnée par la température d'entrée de la zéolite à activer, qui peut être sa température de stockage ou au maximum sa température de sortie de sécheur.

On a pu s'assurer que les méthodes d'activation selon l'invention n'étaient pas préjudiciables aux propriétés mécaniques des granulés.

La nature et la qualité du gaz de balayage n'est pas sans conséquence sur la qualité du produit fini. Il faut utiliser des gaz non agressifs à l'égard de la zéolite, c'est-à-dire secs et non acides, par exemple de l'azote, de l'hydrogène ou des gaz de combustion déshydratés et décarbonatés. On peut sans inconvénient utiliser de l'air atmosphérique, mais il est préférable d'utiliser un air sec. La demanderesse a obtenu de d'excellents résultats avec un gaz constitué par de l'air à très bas point de rosée (typiquement à - 60°C). Les résultats sont encore significativement améliorés quand on utilise de l'air à très bas point de rosée et décarbonaté.

La température du gaz de balayage sera comprise entre 300°C, valeur minimum en dessous de laquelle l'activation ne se produit plus, ou se produit avec une lenteur incompatible avec les exigences d'un procédé industriel, et 700°C, température au-delà de laquelle les structures zéolitiques subissent des dégâts thermiques sensibles.

On travaille avec des vitesses linéaires de gaz traversant la couche de zéolite à activer qui ne sont ni trop lentes, auquel cas on rétablirait les conditions de dégradation hydrothermiques, ni trop rapide pour ne pas perturber la disposition des particules de granulés dans la colonne. En pratique, ces vitesse seront comprises entre 0,01 m.s⁻¹ et 1 m.s⁻¹ T.P.N. L'épaisseur de la couche de granulés de zéolite, sous forme de billes ou d'extrudés, peut être comprise entre une monocouche et plusieurs mètres de granulés sans porter préjudice aux propriétés d'adsorption. Les seules limites quant à la hauteur du lit sont d'ordre pratique; à savoir des pertes de charges inadmissibles quand les couches traversées atteignent de trop fortes épaisseurs, et l'absence de rentabilité de colonnes travaillant sous épaisseur réduite. On peut donner des épaisseurs de 0,03 à 20 mètres comme acceptables pour une exploitation industrielle du procédé selon l'invention.

Les exemples donnés ci-après feront mieux comprendre l'invention.

### Exemple 1

On relate ci-après une pratique d'activation de zéolite selon l'art antérieur connu en lit non traversé. Dans une coupelle dont le diamètre est de 23 cm, on verse sur la grille 1,25 kg de zéolite 5A séchée et agglomérée avec un liant argileux, à raison de 20% en poids de liant par rapport au mélange et mise sous forme d'extrudés de 1,6 mm de diamètre, afin de constituer une couche de 3,5 cm de tamis moléculaire. Cette coupelle est placée dans l'enceinte d'un four électrique maintenu à 575°C pendant 1 heure et demie. Le tamis moléculaire est vidangé chaud dans un flacon de verre et refroidi à l'abri de l'air.

La capacité d'adsorption d'azote du granulé de 5A ainsi activé est mesurée par un test d'adsorption dynamique en colonne, à 25°C, sous une pression partielle d'azote de 157 mm de mercure (21 kPa), avec l'hélium comme gaz vecteur. Cette capacité d'adsorption est de 3,0 mg/g.

### Exemple 2

### Activation longue en lit traversé de faible épaisseur.

Dans un tube métallique d'un diamètre de 23 cm, et dont le fond est muni d'une grille à mailles fines, on verse 1,25 kg des granulés de zéolite 5A à activer de l'exemple 1, de façon à constituer un lit d'environ 3,5 cm d'épaisseur. Cette couche est ensuite traversée par un débit de 46 Nm³/h d'air atmosphérique préalablement chauffé à 575°C par passage sur une résistance électrique. Ce débit correspond à une vitesse linéaire de 0,3 m.s⁻¹ T.P.N. Lorsque les gaz ressortent approximativement à la même température qu'à l'entrée de l'appareil, on poursuit le chauffage pendant une heure; après quoi le tamis moléculaire est vidangé chaud dans un flacon de verre et refroidi à l'abri de l'air.

La capacité d'adsorption d'azote du granulé de zéolite 5A ainsi activé mesurée comme précédemment est de 4,4 mg/g.

### Exemple 3

### Activation rapide en lit traversé de faible épaisseur.

On a reproduit les conditions de l'exemple 2, sauf en ce l'opération est arrêtée cinq minutes après que les gaz ressortent à 575°C.

La capacité d'adsorption d'azote du granulé est de 4,4 mg/g et n'est pas modifiée.

### Exemple 4

On effectue un essai d'activation thermique semblable à celui de l'exemple 2, mais en modifiant la hauteur de la couche de tamis moléculaire. On introduit 5 kg de tamis moléculaire pour obtenir une couche de 17 cm. Le lit de granulés de zéolite est divisé en quatre niveaux qui sont analysés séparément.

Les capacités d'adsorption d'azote entre les niveaux amont et aval sont respectivement de 4,15 mg/g, 4,22 mg/g, 4,21 mg/g et 4,21 mg/g, c'est-à-dire fortes et pratiquement inchangées à tous les niveaux.

### Exemple 5

Dans cet exemple, on effectue l'activation de 1,25 kg de zéolite 5A granulée dans les conditions de l'exemple 2, à l'exception de la température finale qui est de 350°C. La durée de maintien à cette température est de 60 minutes.

Le produit ainsi obtenu a une capacité d'adsorption d'azote de 3,3 mg/g. Toutefois, cette faible capacité n'est le résultat que d'une déshydratation incomplète et non pas d'une dégradation hydrothermique. Si l'activation est poursuivie en four électrique jusqu'à 575°C, la capacité d'adsorption d'azote monte à 4,24 mg/g.

### Exemple 6

On reproduit les conditions de l'exemple 5, à l'exception du débit gazeux de balayage qui est ramené à 3,6 m³/h (vitesse linéaire : 0,022 m.s⁻¹ T.P.N). Le produit déshydraté selon l'invention et dont l'activation est poursuivie à 575°C en four électrique développe une capacité d'adsorption d'azote à saturation de 4,05 mg/g.

### Exemple 7

On reproduit l'essai d'activation dans les conditions de l'exemple 5, mais sur couche épaisse dans une colonne métallique de diamètre interne de 135 mm et d'une hauteur de 2 m. On remplit la colonne avec une vingtaine de kilogrammes d'extrudés de 1,6 mm de zéolite 5A de façon à disposer d'une couche de 175 cm. Le tamis est alors activé en faisant circuler de bas en haut 40 Nm³/h d'air atmosphérique T.P.N. On obtient en bas de colonne une température de 350°C. Si l'on active en four électrique le tamis moléculaire prélevé en bas de colonne, on obtient un granulé qui a une adsorption d'azote à saturation de 4,1 mg/g.

### Exemple 8

On reproduit les conditions de l'exemple 7, mais on augmente la puissance de chauffage de l'air, de sorte que l'on obtienne en bas de colonne une température de sortie de 550°C. La zéolite directement obtenue selon cette méthode a une capacité d'adsorption de 4,24 mg/g.

### Exemple 9

On reproduit l'expérience de l'exemple 2, mais cette fois en remplaçant l'air atmosphérique par de l'air séché sur tamis moléculaire. L'air utilisé a un point de rosée de -60°C. Le tamis moléculaire activé à 575°C, sous 3,5 cm de couche et avec une vitesse des gaz de 0,3 m.s⁻¹ T.P.N. présente une adsorption d'azote à saturation de 5,1 mg/g.

### Exemple 10

On reproduit les conditions de l'exemple 9, mais en remplaçant l'air atmosphérique utilisé pour l'activation par de l'air à la fois séché de telle façon que son point de rosée soit de -60°C et décarbonaté à moins de 10 ppm de CO₂ sur colonne de tamis moléculaire 13X: on obtient une zéolite agglomérée dont la capacité d'adsorption d'azote est de 5,35 mg/g.

### Exemple 11

On charge une colonne métallique de 135 mm de diamètre interne et de 2 m de haut avec une vingtaine de kilogrammes d'extrudés de 1,6 mm de zéolite 5A de façon à disposer d'une couche de 175 cm. Le tamis est alors activé en faisant circuler de bas en haut 40 Nm³/h d'air atmosphérique T.P.N. séché et décarbonaté de telle façon que son point de rosée soit de -60°C et sa teneur en CO₂ inférieure à 10 ppm, et porté à 550°C. Lorsque la température en bas de colonne se stabilise aux environs de sa température d'admission, on poursuit le chauffage encore pendant 60 minutes. On obtient ainsi un aggloméré de zéolite activée dont la capacité d'adsorption d'azote est de 5,35 mg/g.

### Exemple 12

On échange une zéolite X au moyen de CaCl₂ de manière à obtenir un taux d'échange de 83% en nombre d'équivalents de Na⁺ remplacés. Le produit est ensuite aggloméré selon les méthodes classiques au moyen d'un liant argileux, à raison de 20% en poids de liant dans le produit final.

L'aggloméré est ensuite activé dans la colonne d'activation à lit traversé, à une température qui est ici de 600°C, la hauteur de couche de zéolite étant de 7 cm et le débit du gaz de 40 Nm³ par heure. On obtient un granulé de zéolite activée dont la capacité d'adsorption d'azote à 25°C et sous 157 mm de mercure (21kPa) est de 6,67 mg/g; la même zéolite activée en étuve a une capacité d'adsorption qui n'est que de 3,46 mg/g.

## Revendications

1. Procédé d'activation de zéolites dont les propriétés d'adsorption sont sensibles à la dégradation par action combinée de la vapeur d'eau et de la température qui consiste à réaliser un lit homogène et d'épaisseur comprise entre 0,03 et 20 mètres de granulés de ladite zéolite sous sa forme hydratée, qu'on force à travers ce lit un courant d'un gaz sec non acide préchauffé à une température comprise entre 300°C et 700°C à une vitesse comprise entre 0,01 et 1 m.s⁻¹ T.P.N. rendue uniforme par tout moyen approprié, puis qu'on vidange et qu'on conditionne la zéolite à l'abri de l'air ambiant.

2. Procédé d'activation de zéolites selon la revendication 1, caractérisé en ce que l'activation est conduite en discontinu dans une colonne à lit fixe, et que la percolation est poursuivie tant qu'en sortie de colonne le gaz chaud ne sort pas à une température constante voisine de sa température d'entrée.

3. Procédé d'activation de zéolites selon la revendication 1, caractérisé en ce que l'activation est conduite en continu dans une colonne à lit mobile, le débit de gaz chaud étant tel qu'en sortie de colonne, le gaz reste à une température voisine de la température d'introduction de la zéolite et que sa teneur en eau soit inférieure à sa teneur en eau à saturation à cette température.

4. Procédé selon l'une quelconque des revendications 1 à 3, dans lequel le gaz forcé à travers le lit de granulés de zéolites est préchauffé préférentiellement entre 550°C et 600°C.

5. Procédé selon l'une quelconque des revendications 1 à 3, dans lequel une activation partielle de granulés de zéolite par forçage de gaz chauffé entre 300°C et 550°C à travers le lit de granulés de zéolites est complétée par un chauffage en four à des températures comprises entre 550°C et 700°C.

6. Procédé selon l'une quelconque des revendications 1 à 5, dans lequel le gaz est de l'air préalablement séché.

7. Procédé selon la revendication 6, dans lequel l'air utilisé a été préalablement décarbonaté.

8. Procédé selon l'une quelconque des revendications 1 à 7, dans lequel les zéolites sont des zéolites A ou X.

## Claims

1. Process for the activation of zeolites whose adsorption properties are sensitive to degradation by combined action of water vapour and temperature, which consists in producing a homogeneous bed, between 0.03 and 20 metres in thickness, of granules of the said zeolite in its hydrated form, in that a stream of a nonacidic dry gas preheated to a temperature of between 300°C and 700°C is forced through this bed at a speed of between 0.01 and 1 m s⁻¹ S.T.P. made uniform by any appropriate means, and in that the zeolite is then drained out and packaged with protection from the ambient air.

2. Process for the activation of zeolites according to Claim 1, characterized in that the activation is conducted noncontinuously in a stationary-bed column, and in that the percolation is continued as long as the hot gas does not leave the column exit at a constant temperature close to its entry temperature.

3. Process for the activation of zeolites according to Claim 1, characterized in that the activation is conducted continuously in a moving-bed column, the flow rate of hot gas being such that at the column exit the gas remains at a temperature close to the entry temperature of the zeolite and that its water content is lower than its saturation water content at this temperature.

4. Process according to any one of Claims 1 to 3, in which the gas forced through the bed of zeolite granules is preferably preheated between 550° and 600°C.

5. Process according to any one of claims 1 to 3, in which a partial activation of zeolite granules by forcing gas heated between 300°C and 550°C through the bed of zeolite granules is supplemented by heating in an oven at temperatures of between 550°C and 700°C.

6. Process according to any one of Claims 1 to 5, in which the gas is predried air.

7. Process according to Claim 6, in which the air employed has been decarbonated beforehand.

8. Process according to any one of Claims 1 to 7, in which the zeolites are zeolites A or X.

## Patentansprüche

1. Verfahren zur Aktivierung von Zeolithen, deren Adsorptionsfähigkeit durch gemeinsame Einwirkung von Wasserdampf und Temperatur verschlechtert werden können, das darin besteht, daß man eine homogene Schicht mit einer Dicke zwischen 0,03 und 20 Metern aus Granulaten dieser Zeolithe in hydratisierter Form bereitstellt, daß man einen nicht sauren, trockenen Gasstrom, der auf eine Temperatur zwischen 300 und 700 °C vorgeheizt ist, mit einer Geschwindigkeit zwischen 0,01 und 1 m · s⁻¹ unter Normalbedingungen durch diese Schicht hindurchpreßt, wobei die Geschwindigkeit durch ein beliebiges geeignetes Mittel gleichmäßig beibehalten wird, daß man dann die Schicht entleert und daß man den Zeolith unter Ausschluß der Umgebungsluft konditioniert.

2. Verfahren zur Aktivierung von Zeolithen nach Anspruch 1, dadurch gekennzeichnet, daß die Aktivierung in einer Festbettkolonne diskontinuierlich durchgeführt wird und daß die Perkolation solange weitergeführt wird, bis das heiße Gas am Ausgang der Kolonne bei einer konstanten Temperatur austritt, die in etwa der Eintrittstemperatur entspricht.

3. Verfahren zur Aktivierung von Zeolithen nach Anspruch 1, dadurch gekennzeichnet, daß die Aktivierung in einer Wirbelbettkolonne kontinuierlich durchgeführt wird, daß der Durchsatz des heißen Gases dem am Kolonnenausgang entspricht, daß das Gas in etwa die Temperatur beibehält, bei der die Zeolithe eingebracht worden sind und daß ihr Wassergehalt kleiner ist, als der Sättigungswassergehalt bei dieser Temperatur.

4. Verfahren nach einem der Ansprüche 1 bis 3, in dem das Gas, das durch die Schicht aus Zeolithgranulaten durchgeleitet wird, vorher erwärmt wird, vorzugsweise zwischen 550 und 600 °C.

5. Verfahren nach einem der Ansprüche 1 bis 3, in dem eine Teilaktivierung der Zeolithgranulate durch Hindurchpressen eines auf eine Temperatur zwischen 300 und 550 °C erhitzten Gases durch ein Bett aus Zeolithgranulaten mittels Aufheizen im Ofen bei einer Temperatur zwischen 550 und 700 °C abgeschlossen wird.

6. Verfahren nach einem der Ansprüche 1 bis 5, in dem das Gas aus zuvor getrockneter Luft besteht.

7. Verfahren nach Anspruch 6, in dem das verwendete Gas zuvor entcarbonisiert wird.

8. Verfahren nach einem der Ansprüche 1 bis 7, in dem die Zeolithe vom Typ Zeolith A oder Zeolith X sind.
